# EUROPEAN PATENT SPECIFICATION

(11) **EP 4 341 174 B1**
(45) Date of publication and mention of the grant of the patent: **29.01.2025**
(21) Application number: 22729125.9
(22) Date of filing: 12.05.2022
(51) Int. Cl.: B65G 1/04, B65G 1/10, B65G 65/00

(54) **A STORAGE COLUMN MODULE FOR COUPLING TO A FRAMEWORK STRUCTURE OF AN AUTOMATED STORAGE AND RETRIEVAL SYSTEM**
SPEICHERSÄULENMODUL ZUR KOPPLUNG AN EINE RAHMENSTRUKTUR EINES AUTOMATISIERTEN SPEICHER- UND ABRUFSYSTEMS
MODULE DE COLONNE DE STOCKAGE POUR L'ACCOUPLEMENT À UNE STRUCTURE D'OSSATURE D'UN SYSTÈME DE STOCKAGE ET DE RÉCUPÉRATION AUTOMATISÉ

(30) Priority: 21.05.2021 NO 20210629; 28.05.2021 NO 20210679; 16.08.2021 NO 20210979
(43) Date of publication of application: 27.03.2024
(73) Proprietor: Autostore Technology AS, 5578 Nedre Vats (NO)
(72) Inventor: DJUVE, HEGGEBØ, Jørgen, 1405 Langhus (NO); GJERDEVIK, Øystein, 5574 Skjold (NO)
(74) Representative: Kilburn & Strode LLP
(86) International application number: PCT/EP2022/062909
(87) International publication number: WO 2022/243153

(56) References cited:
- WO-A1-2016/166294
- US-A1- 2003 228 208
- US-A1- 2007 297 879
- US-A1- 2018 150 793
- US-A1- 2021 052 070

## Description

The present invention relates to an automated storage and retrieval system comprising a framework structure and further comprising a detachable storage column module for coupling to said framework structure.

### BACKGROUND AND PRIOR ART

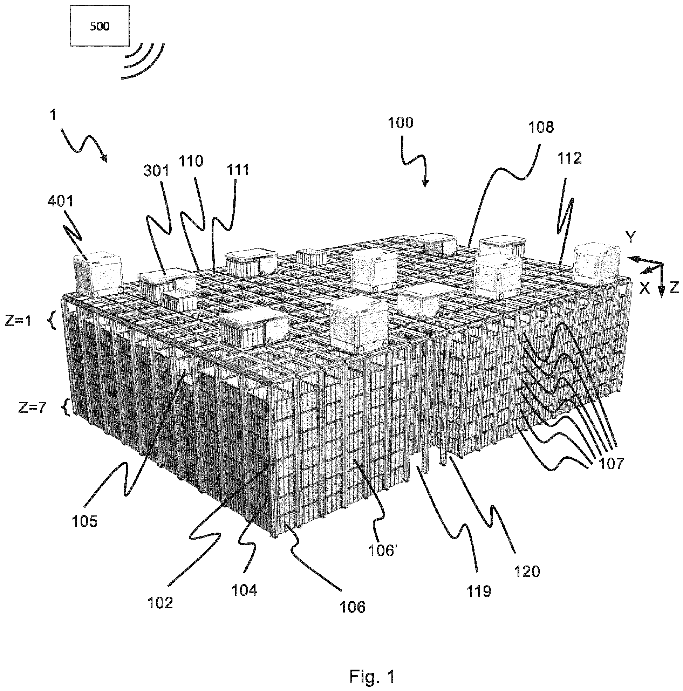

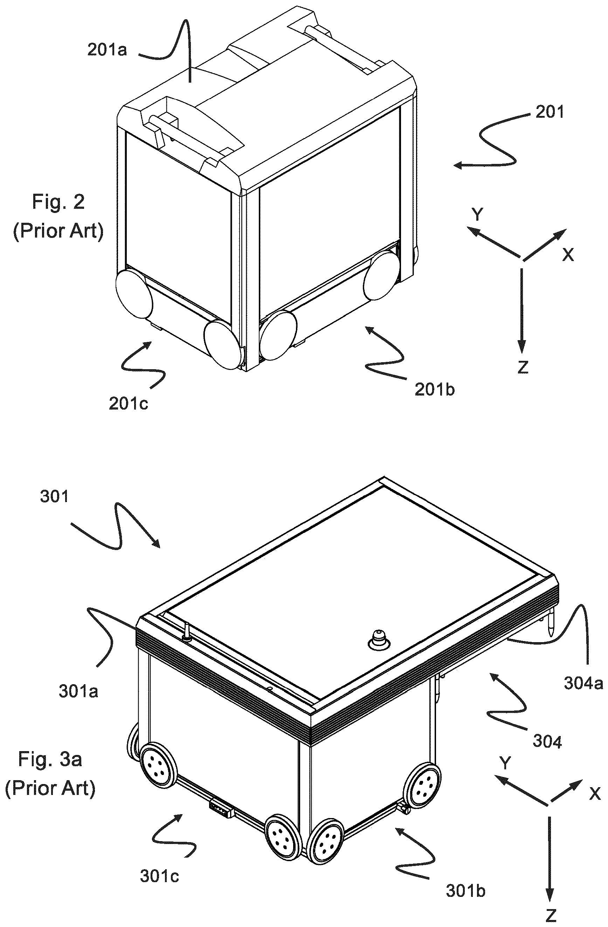

Fig. 1 discloses a prior art automated storage and retrieval system 1 with a framework structure 100 and Figs. 2, 3a-3b disclose three different prior art container handling vehicles 201, 301, 401 suitable for operating on such a system 1. The framework structure 100 comprises upright members 102 and a storage volume comprising storage columns 105 arranged in rows between the upright members 102. In these storage columns 105 storage containers 106, also known as bins, are stacked one on top of one another to form container stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 301, 401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 301, 401 in a first direction *X* across the top of the frame structure 100, and a second set of parallel rails 111 arranged perpendicular to the first set of rails 110 to guide movement of the container handling vehicles 301, 401 in a second direction *Y* which is perpendicular to the first direction *X*. Containers 106 stored in the columns 105 are accessed by the container handling vehicles 301, 401 through access openings 112 in the rail system 108. The container handling vehicles 301, 401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically selfsupportive.

Each prior art container handling vehicle 201, 301, 401 comprises a vehicle body 201a, 301a, 401a and first and second sets of wheels 201b, 201c, 301b, 301c, 401b, 401c which enable lateral movement of the container handling vehicles 201, 301, 401 in the *X* direction and in the *Y* direction, respectively. In Figs. 2-3b, two wheels in each set are fully visible. The first set of wheels 201b, 301b, 401b is arranged to engage with two adjacent rails of the first set 110 of rails, and the second set of wheels 201c, 301c, 401c is arranged to engage with two adjacent rails of the second set 111 of rails. At least one of the sets of wheels 201b, 201c, 301b, 301c, 401b, 401c can be lifted and lowered, so that the first set of wheels 201b, 301b, 401b and/or the second set of wheels 201c, 301c, 401c can be engaged with the respective set of rails 110, 111 at any one time.

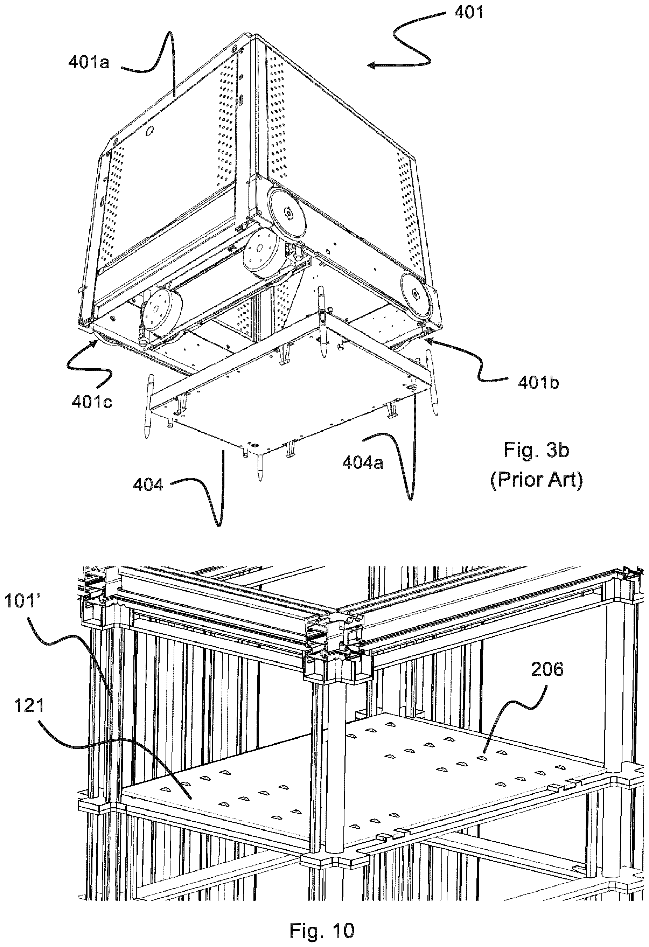

Each prior art container handling vehicle 201, 301, 401 also comprises a lifting device 304, 404 (visible in Figs. 3a-3b) having a lifting frame part 304a, 404a for vertical transportation of storage containers 106, e.g. raising a storage container 106 from, and lowering a storage container 106 into, a storage column 105. The lifting device 304, 404 comprises one or more gripping/engaging devices which are adapted to engage a storage container 106, and which gripping/engaging devices can be lowered from the vehicle 201, 301, 401 so that the position of the gripping/engaging devices with respect to the vehicle 201, 301, 401 can be adjusted in a third direction *Z* (visible for instance in Fig. 1) which is orthogonal the first direction *X* and the second direction *Y.* Parts of the gripping device of the container handling vehicles 301, 401 are shown in Figs. 3a and 3b indicated with reference number. The gripping device of the container handling device 201 is located within the vehicle body 201a in Fig. 2.

Conventionally, and also for the purpose of this application, *Z*=1 identifies the uppermost layer available for storage containers below the rails 110, 111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X=*1*...n* and *Y=*1*...n* identifies the position of each storage column 105 in the horizontal plane. Consequently, as an example, and using the Cartesian coordinate system *X*, *Y, Z* indicated in Fig. 1, the storage container identified as 106' in Fig. 1 can be said to occupy storage position *X=18, Y=1, Z=6.* The container handling vehicles 201, 301, 401 can be said to travel in layer Z=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y- and Z-direction.

Each prior art container handling vehicle 201, 301, 401 comprises a storage compartment or space for receiving and stowing a storage container 106 when transporting the storage container 106 across the rail system 108. The storage space may comprise a cavity arranged internally within the vehicle body 201a as shown in Figs. 2 and 3b and as described in e.g. WO2015/193278A1 and WO2019/206487A1.

Fig. 3a shows an alternative configuration of a container handling vehicle 301 with a cantilever construction. Such a vehicle is described in detail in e.g. NO317366.

The cavity container handling vehicles 201 shown in Fig. 2 may have a footprint that covers an area with dimensions in the X and Y directions which is generally equal to the lateral extent of a storage column 105, e.g. as is described in WO2015/193278A1.

The term `lateral' used herein may mean 'horizontal'.

Alternatively, the cavity container handling vehicles 401 may have a footprint which is larger than the lateral area defined by a storage column 105 as shown in Fig. 3b and as disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks; in other rail systems 108, each rail in one direction may comprise one track and each rail in the other perpendicular direction may comprise two tracks. The rail system may also comprise a double track rail in one of the X or Y direction and a single track rail in the other of the X or Y direction. A double track rail may comprise two rail members, each with a track, which are fastened together.

WO2018/146304A1, illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201, 301, 401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or a dedicated column 105 within the framework structure 100, then picked up by any container handling vehicle and transported to a port column 119, 120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201, 301 can drop off storage containers 106 to be transported to an access or a transfer station, and the second port column 120 may be a dedicated pick-up port column where the container handling vehicles 201, 301, 401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are, once accessed, returned into the framework structure 100. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119, 120 and the access station.

If the port columns 119, 120 and the access station are located at different heights, the conveyor system may comprise a lift device with a vertical component for transporting the storage containers 106 vertically between the port column 119, 120 and the access station.

The conveyor system may be arranged to transfer storage containers 106 between different framework structures, e.g. as is described in WO2014/075937A1.

When a storage container 106 stored in one of the columns 105 disclosed in Fig. 1 is to be accessed, one of the container handling vehicles 201, 301, 401 is instructed to retrieve the target storage container 106 from its position and transport it to the drop-off port column 119. This operation involves moving the container handling vehicle 201, 301 to a location above the storage column 105 in which the target storage container 106 is positioned, retrieving the storage container 106 from the storage column 105 using the container handling vehicle's 201, 301, 401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201, 301, 401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201, 301, 401 is instructed to pick up the storage container 106 from the pick-up port column 120 and transport it to a location above the storage column 105 where it is to be stored. After storage containers 106 positioned at or above the target position within the stack 107 have been removed, the container handling vehicle 201, 301, 401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106 and the movement of the container handling vehicles 201, 301, 401 so that a desired storage container 106 can be delivered to the desired location at the desired time without the container handling vehicles 201, 301, 401 colliding with each other, the automated storage and retrieval system 1 comprises a control system 500 (shown in Fig. 1) which typically is computerized and which typically comprises a database for keeping track of the storage containers 106.

WO14195901 discloses a system for stacking containers in an automated storage and retrieval system comprising a delivery port where an ordered container can be transported to. The container can be lowered to or placed on a conveyance for delivery to an order picking station at the port. The system can include one or more clamps, each clamp corresponding to a stack location and being configured for clamping one or more of the lowest containers in a stack. One or more lifters is configured for lifting one or more containers into position suitable for engagement by the clamp(s) and at least one overhead load handler is configured for lifting one or more containers from a top of the stack and for lowering one or more containers onto the top of the stack.

US2003/228208A in an abstract states that "A vertical conveyor for transporting a load in a warehouse equipped with shelves. This vertical conveyor comprises a plurality of receiving devices spaced apart from one another. These receiving devices receive a load and can be displaced vertically. There are also a series of stationary transport elements disposed adjacent to the plurality of receiving devices in an alternating manner. The plurality of receiving devices can comprise driven rollers while the series of stationary transport elements can also comprise driven rollers. There is also a vertical conveyor system that includes a plurality of vertically extending columns defining a shaft. The vertical conveyor can move vertically in this shaft. The vertically extending columns have at least one foldable element coupled to it wherein the foldable element is designed to fold down to allow the vertical conveyor to travel in the shaft and to fold up to remove a load from the vertical conveyor."

WO2016/166294A1 in an abstract states that "An object handling system is described, the system comprising two substantially perpendicular sets of rails forming a grid above a workspace, the workspace comprising a plurality of stacked containers. The system further comprises a series of robotic load handling devices operating on the grid above the workspace, the load handling devices comprising a body mounted on wheels. The robotic devices can move around the grid under instruction from computing means, the robotic devices being moved to a point on the grid above a stack of containers and then, using lifting means, engage and lift a container from the stack. The container is then moved to a point where the objects in the container can be accessed. Modifications to the workspace and grid are described that allows vehicles and roll cages to be used to move stacks from the workspace to a point outside the workspace or from outside the workspace in to the workspace." In particular, WO2016/166294A1 discloses an automated storage and retrieval system according to the preamble of claim 1.

US2018/150793A1 in an abstract states that "A system and method are disclosed for supplying one or more goods to a physical store location. The goods may be received at a distribution center (DC). At the DC, the goods may be decanted from their shipping containers into one or more sub-totes, which are contained within one or more product totes. The sub-totes may be transferred from the one or more product totes to one or more order totes based on a velocity of movement of the plurality of goods at the physical store location."

US2007/297879A1 in an abstract states that "Present invention makes it possible to automatically transport carts in which trays with medicine contained can be stored. In order to transport the cart comprising a plurality of support panels 38 juxtaposed to each other, a lower connection member 41 connecting the lower end portions of the plurality of support panels 38 and casters 44 positioned below the lower connection member 41 , the cart transport apparatus comprises a frame 51 having wheels 50 which can be driven to rotate, the frame 51 being movable beneath the lower connection member 41 of the cart 8 and a grip member 55 for gripping the lower connection member 41 of the cart 8."

US2021/052070A1 in an abstract states that "A stacking storage arrangement is specified, comprising a rack having multiple container receiving spaces that each have an opening at the bottom end thereof, wherein at at least one opening a latch arrangement is arranged which comprises at least one latch unit having a holding latch that can be moved between a locking position and a release position. An objective is to be able to operate a stacking storage arrangement of this type in an economical manner. For this purpose, the holding latch is configured to be replaced from the inner side of the opening."

In view of the above, it is desirable to provide a solution that solves or at least mitigates one or more of the aforementioned problems belonging to the prior art.

### SUMMARY OF THE INVENTION

The present invention is set out in the independent claim, with some optional features set out in the claims dependent thereto.

There is a storage column module provided for coupling to a framework structure of an automated storage and retrieval system, said module comprising at least one storage column for accommodating goods holders inserted by means of a remotely operated vehicle operating on a rail system arranged across the top of the framework structure, the at least one storage column comprising a plurality of storage cells each comprising a goods holder support movable between a first position in which said support can obstruct passage of the goods holder moving vertically through the storage cell and a second position in which the vertically moving goods holder can pass through the storage cell.

By providing a storage column module, i.e. having a movable goods holder support, it is possible to load/unload the holder in a standard manner, i.e. by means of a remotely operated vehicle positioned on top of the of the framework structure of the system. The requirement is then for the support to be in a second position, allowing the vertically moving storage container to freely traverse the empty storage cell. In a related context, the customary stacking of goods holders, i.e. superposing holders so that a given goods holder is in physical contact with both vertically adjacent holders, may be dispensed with. This is achieved when the movable goods holder support are positioned in a first position in which the support may hold and support the goods holder. In this context, a further advantage conferred by the invention is that digging for goods holders, for instance for those goods holders that require high frequency access and/or in the context of part-consolidated orders, may be dispensed with.

In addition, the degree of alignment of goods holders, when positioned in the storage column, critical in the context of a conventional stack of holders, becomes irrelevant.

According to the invention relates to an automated storage and retrieval system is provided and is comprising a framework structure that comprises a plurality of storage columns for accommodating goods holders, wherein a rail system is arranged across the top of the framework structure, the automated storage and retrieval system further comprising a detachable storage column module for coupling to the framework structure of the system, said module comprising at least one storage column for accommodating goods holders inserted by means of a remotely operated vehicle operating on the rail system, the at least one storage column comprising a plurality of storage cells each comprising a goods holder support movable between a first position in which said support can obstruct passage of the goods holder moving vertically through the storage cell and a second position in which the vertically moving goods holder can pass through the storage cell.

For the sake of brevity, advantages discussed above in connection with the detachable module may even be associated with the automated storage and retrieval system according to the invention and are not further discussed. For the purposes of this application, the term "container handling vehicle" used in "Background and Prior Art"-section of the application and the term "remotely operated vehicle" used in "Detailed Description of the Invention"-section both define an autonomous wheeled vehicle operating on a rail system arranged across the top of the framework structure being part of an automated storage and retrieval system.

Analogously, the term "storage container" used in "Background and Prior Art"-section of the application and the term "goods holder" used in "Detailed Description of the Invention"-section both define a receptacle for storing items. In this context, the goods holder can be a bin, a tote, a pallet, a tray or similar. Different types of goods holders may be used in the same automated storage and retrieval system.

The relative terms "upper", "lower", "below", "above", "higher" etc. shall be understood in their normal sense and as seen in a Cartesian coordinate system.

When mentioned in relation to a rail system, "upper" or "above" shall be understood as a position closer to the surface rail system (relative to another component), contrary to the terms "lower" or "below" which shall be understood as a position further away from the rail system (relative another component).

### BRIEF DESCRIPTION OF THE DRAWINGS

Following drawings are appended to facilitate the understanding of the invention.

The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3a is a perspective view of a prior art container handling vehicle having a cantilever for carrying storage containers underneath.
Fig. 3b is a perspective view, seen from below, of a prior art container handling vehicle having an internally arranged cavity for carrying storage containers therein.
Fig. 4a shows an example of an automated storage and retrieval system according to the invention comprising a storage column module.
Fig. 4b shows another example of an automated storage and retrieval system according to the invention. comprising a storage column module.
Fig. 5 is a perspective view of a storage column module.
Fig. 6 shows means for guiding a storage column module.
Fig. 7a shows a storage cell with a goods holder support.
Figs. 7b shows a goods holder support.
Fig. 8 is a close-up showing backside of a goods holder support.
Figs. 9a-9e show a sequence featuring coupling of a detachable storage module to a framework structure of an automated storage and retrieval system as well as pivoting motion of a goods holder support.
Fig. 10 shows a goods holder support comprising friction reducing means.
Fig. 11 shows a storage column module provided with wheels and configured to be towed.
Fig. 12 shows a self-propelled storage column module.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3b, i.e. a number of upright members 102, wherein the framework structure 100 also comprises a first, upper rail system 108 in the X-direction and Y-direction.

The framework structure 100 further comprises storage compartments in the form of storage columns 105 provided between the members 102 where storage containers 106 are stackable in stacks 107 within the storage columns 105.

The framework structure 100 can be of any size. In particular, it is understood that the framework structure can be considerably wider and/or longer and/or deeper than what is disclosed in Fig. 1. For example, the framework structure 100 may have a horizontal extent of more than 700x700 columns and a storage depth of more than twelve containers.

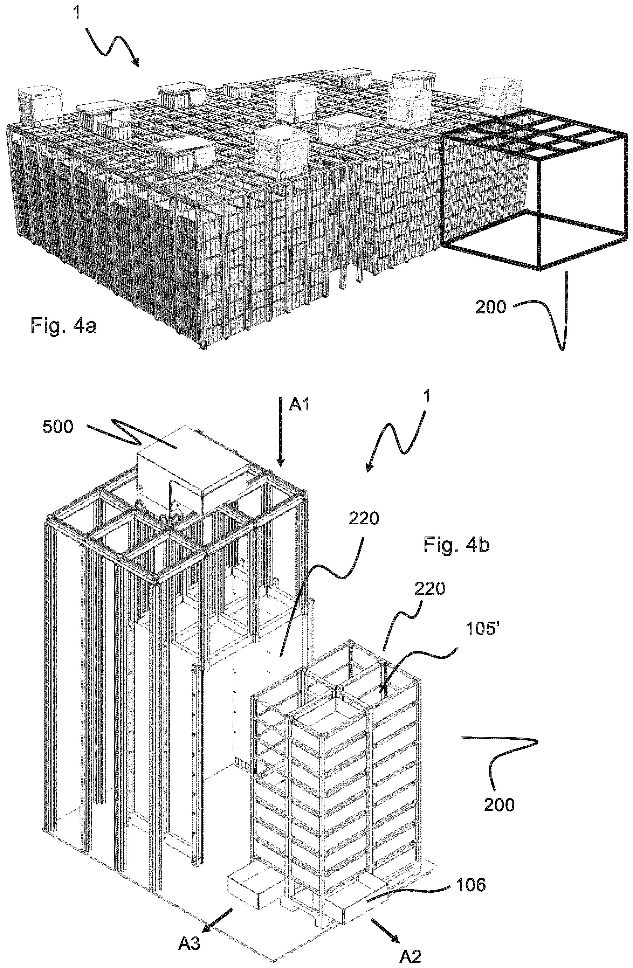

Various aspects of the present invention will now be discussed in more detail with reference to Figs. 4a-12.

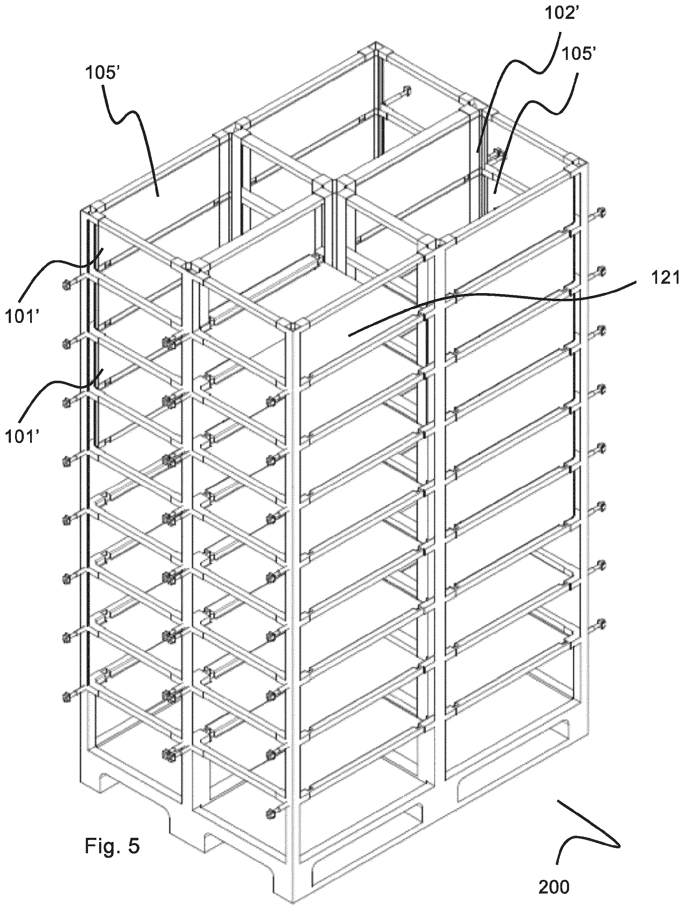

Fig. 4a shows an example of an automated storage and retrieval system 1 comprising a schematically drawn storage column module 200. As discussed above, the automated storage and retrieval system 1 comprises a framework structure that comprises a plurality of storage columns for accommodating goods holders, wherein a rail system is arranged across the top of the framework structure 100. The automated storage and retrieval system 1 further comprises the storage column module 200 for coupling to the framework structure of the system 1. The detachable module 200 is arranged external to the system 1. The module 200 will be discussed in greater detail in conjunction with Fig. 5.

Fig. 4b shows another example of an automated storage and retrieval system 1 comprising a storage column module 200. The shown detachable module 200 is insertable into a free space 220 of the system 1. In one embodiment, goods holders 106, when accommodated in the module 200, and the goods holders, when accommodated in the automated storage and retrieval system 1, have the same orientation. Furthermore, the storage cell of the module 220 and a storage cell of the automated storage and retrieval system 1 are equisized. Referring back to Fig. 4a, the module 200 may have the same storage depth as the framework structure 100.

Fig. 5 is a perspective view of a storage column module 200. The storage column module 200 is suitable for coupling, e.g. slotting, to a framework structure 100 of an automated storage and retrieval system 1 of Figs. 4a-4b. The module 200 comprises in total four (2x2) storage columns 105' for accommodating goods holders (not shown in Fig. 5). The goods holders are top-fed into the storage column 105' by means of a remotely operated vehicle shown in Fig. 4b. Arrow A1 in Fig. 4b denotes the direction of insertion.

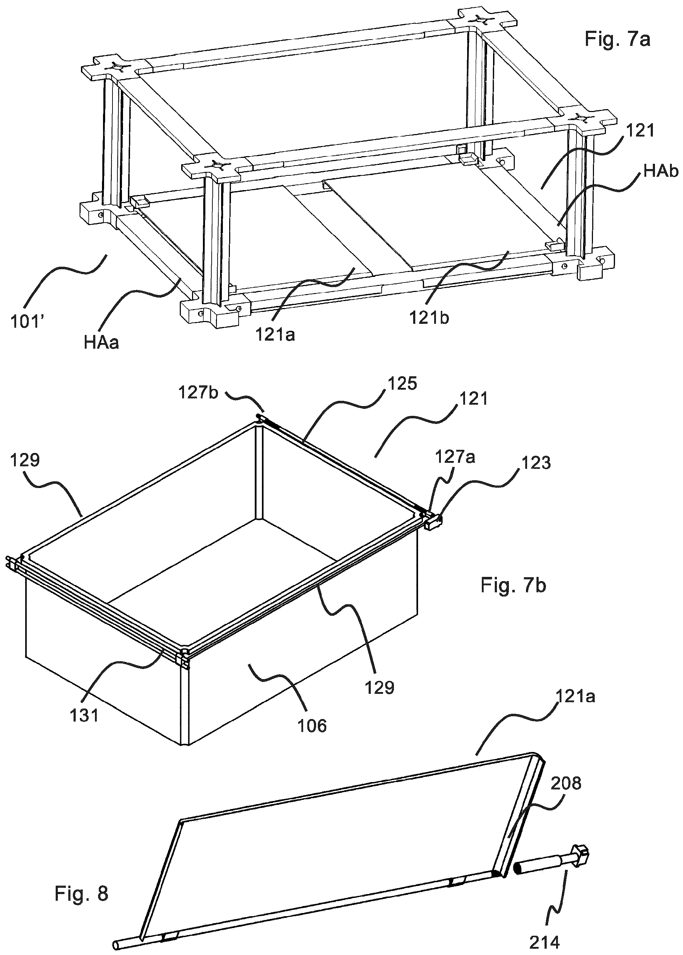

With reference to Figs. 4a-4b, said vehicle 500 operates on a rail system arranged across the top of the framework structure. Turning back to Fig. 5, each storage column 105' comprises a plurality of storage cells 101, each comprising a goods holder support 121 movable between a first position in which said support can obstruct passage of the goods holder moving vertically through the storage cell and a second position in which the vertically moving goods holder can pass through the storage cell 101. Properties of an exemplary storage cell 101 and a thereto associated goods holder support 121 will be discussed in greater detail in conjunction with Figs. 7a-7b.

By providing a storage column module 200 having a movable goods holder support 121, it is possible to load/unload the holder in a standard manner, i.e. by means of a remotely operated vehicle positioned on top of the of the framework structure of the system. The requirement is then for the support to be in a second position, allowing the vertically moving storage container to freely traverse the empty storage cell. In a related context, the customary stacking of goods holders, i.e. superposing holders so that a given goods holder is in physical contact with both vertically adjacent holders, may be dispensed with. This is achieved when the movable goods holder support are positioned in a first position in which the support may hold and support the goods holder.

In addition and by virtue of the invention, the degree of alignment of goods holders, when positioned in the storage column, critical in the context of a conventional stack of holders, becomes irrelevant.

Turning back to Fig. 4b, the goods holder 106 may be extracted from the storage cell (101' shown in Fig. 5) of the at least one storage column 105' in any direction perpendicular to its direction of insertion. Arrows A2, A3 denote these directions of extraction. This confers greater flexibility as the extraction process may be performed by the operator/customer without use of a remotely operated vehicle. As shown, such a lateral extraction may take place on the short side as well as on the long side of the storage cell. This is particularly advantageous when said module is a part of a micro-fulfillment center (MFC).

In a related context, structural properties of the material of the goods holder 106 become less important. More specifically, a given goods holder 106 is in certain, well-defined applications no longer required to support the aggregated weight of the goods holders and the stored contents positioned above the given goods holder 106. Accordingly, the goods holder 106 may be made in a less expensive material and/or the quantum of material used to manufacture goods holders may be significantly reduced.

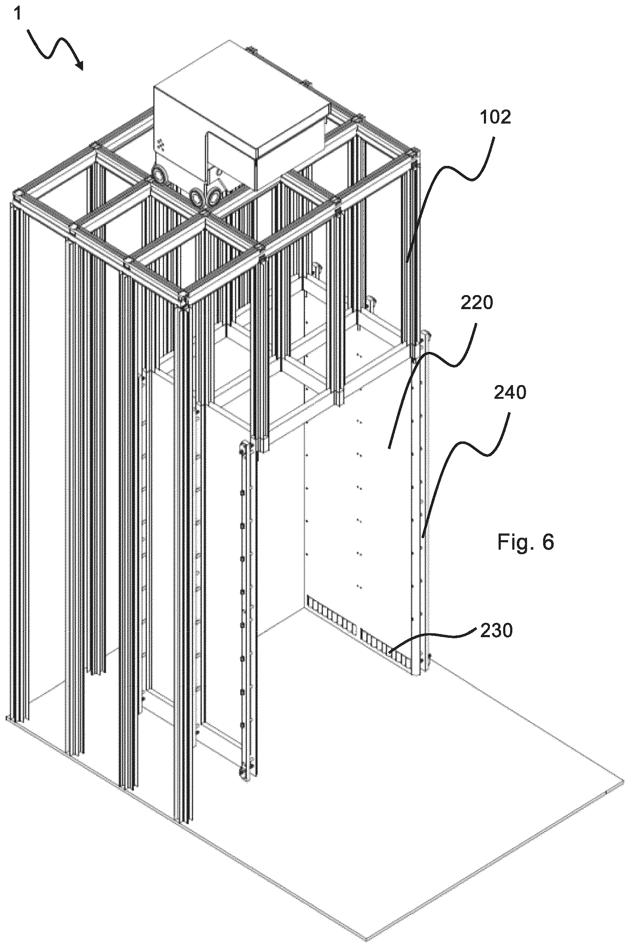

Fig. 6 shows means for guiding a storage column module (not shown). In the shown embodiment, the module will be guided into a correct position, i.e. the free space 220, by means of oppositely arranged sets of rollers 230. These sets of rollers are typically provided on the opposite sides and close to the bottom as well as to the top of the cover plates 240 delimiting said free space 220. In one embodiment, a single set of rollers 230 is sufficient for successfully guiding the storage column module. With reference to Figs. 4b and 6, once the module is in correct position, upright members 102 of the framework structure 100 are aligned with upright members (102', shown in Fig. 5) of the framework structure of the module. Still with reference to Figs. 4b and 6, the automated storage and retrieval system 1 could comprise means for locking the module in the correct position such as a releasable latch (not shown).

In an alternative embodiment (not shown), said means for guiding could comprise a complementary groove-and-projection assembly.

Fig. 7a shows a storage cell 101' with a goods holder support 121. The goods holder support 121 is pivotable about a horizontal axis extending between two adjacent corners of the storage cell 101. Still with reference to Fig. 7a, the goods holder support 121 comprises two parts 121a, 121b having parallel pivot axes HAa, HAb. The shown goods holder support 121 is in a first position, parts 121a, 121b are parallel with bottom surface of the storage cell 101', and can obstruct passage of the goods holder (not shown) moving vertically through the storage cell 101'. In a second position (not shown), parts 121a, 121b are perpendicular to the bottom surface of the storage cell 101', the vertically moving goods holder can pass through the storage cell 101'.

With additional reference to Fig. 4b, in a further embodiment (not shown), the goods holder is introduced into a selected storage cell of a selected storage column laterally, i.e. via the short or the long side of the storage cell. This is preceded by lowering the goods holder by means of a remotely operated vehicle into the storage column adjacent to said selected storage column. In this embodiment, it is required that the goods holder support rests in a first position and covers bottom surface of the storage cell.

The goods holder support of the above kind may be motorized, it may for instance comprise a motorized actuator, alternatively be spring-loaded or otherwise configured to reciprocate between the first and the second positions.

Such a motorized goods holder support 121 is shown in Fig. 7b. In Fig. 7b, a motor 123 associated with the goods holder support 121 causes an elongate, cylindrically shaped, partially threaded bar 125 to axially rotate. Two internally threaded sleeves 127a, 127b are arranged on opposite ends of the bar 125. Each sleeve 127a, 127b is connected to a rod 129 arranged perpendicularly with respect to the threaded bar 125. At the other end, each rod 129 is slidably connected to another bar 131, parallel with the threaded bar 125. The sleeves 127a, 127b have different handedness - one is lefthanded, the other one is right-handed. Accordingly, the distance between the sleeves 127a, 127b is variable and may be controlled through axial rotation of the bar 125. This entails that distance between rods 129 also is controllable through said axial rotation. Accordingly, the goods holder support 121 is translatory movable between a first position in which the threaded sleeves 127a, 127b are relatively close so that said support 121 can obstruct passage of the goods holder 106 moving vertically through the storage cell, and a second position where the threaded sleeves 127a, 127b are far apart and the vertically moving goods holder 106 can pass through the storage cell. In this embodiment, the goods holder 106, when in storage cell, is suspended from the rods 129 of the goods storage holder 121. In a related embodiment, the goods holder 106 may be suspended from the rods as well as from the threaded bars. In such an embodiment, the rods 129 would require driving means and threading as well dedicated sleeves analogous to those employed in connection with the threaded bar 125.

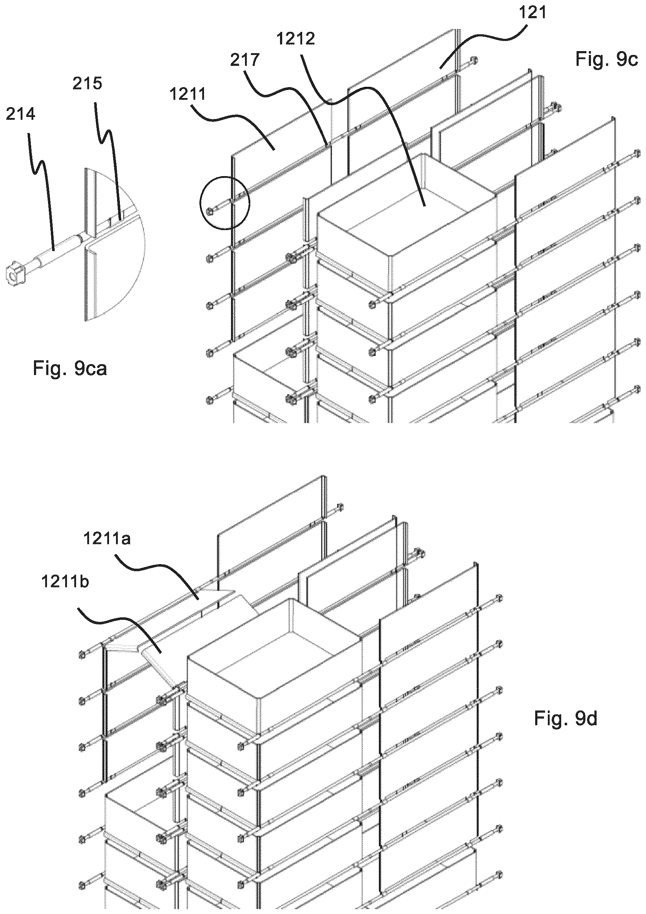

Fig. 8 is a close-up showing backside of a goods holder support part 121a shown in Fig. 7a so that guide means 208 becomes visible. Guide means 208 in suitable material are provided to facilitate passage of the vertically moving goods holder 106 when the goods holder support is in second position. Fig. 8 further shows a device 214 for altering position of the goods holder support. This can be done individually or by means of a tool simultaneously handling a plurality of devices. Said device 214 and its function will be more discussed in conjunction with Fig 9c.

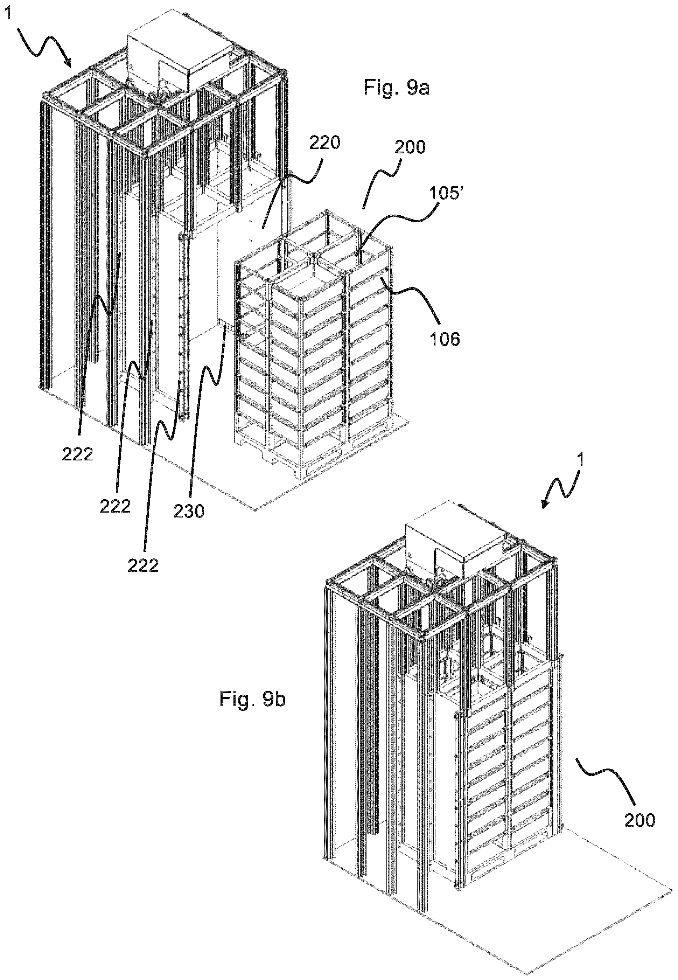

Figs. 9a-9e show a sequence featuring coupling of a detachable storage module to a framework structure of an automated storage and retrieval system as well as pivoting motion of a goods holder support.

In Fig. 9a, the detachable module 200 is shown at a distance relative the system 1 shown in Fig. 4b. Shown module 200 comprises four (2x2) storage columns 105' for accommodating goods holders 106. The module 200 is here approximately aligned with the free space 220 and a set of rollers 230 discussed in conjunction with Fig. 6 will facilitate the coupling process.

In Fig. 9b, the module 200 is introduced into the free space. By way of example, this may be effected by means of a forklift (not shown). As an alternative, the module may be provided with wheels so as to enable manual handling.

A unit for controlling the position of the goods holder support of the storage cell is shown in Figs. 9a-9b. Said unit is part of the system 1 and comprises three pairs of vertically extending, oppositely arranged bars 222 arranged at a distance from one another. Each bar 222 comprises an array of devices for altering position of the thereto associated goods holder support. These devices will be discussed in greater detail in conjunction with Fig. 9c. In an alternative embodiment (not shown), the position of the goods holder support of the storage cell is controlled by the storage column module.

Fig. 9c is a close-up showing uppermost levels of the storage module whereas Fig. 9ca is an enlarged view of the encircled detail of Fig. 9c. For each storage cell 101, a device 214 for altering position of the goods holder support is engaged with a rotatable axis 217 on which the goods holder support 121 is hinged (hinge 215 is visible in Fig. 9ca). Rotation of said rotatable axis 217 brings about previously discussed pivot movement of the goods holder support 121. Rotation of said rotatable axis 217 is caused by turning of the device 214, either manually or by means of a suitable tool.

The goods holder supports 121 of Fig. 9c are in both first and second positions. By way of example and with reference to the uppermost storage cell to the left in Fig. 9c, the goods holder support 1211 is in second position in which said support doesn't obstruct passage of the goods holder (not shown) moving vertically through the storage cell, whereas a neighbouring goods holder support 1212 is in first position and supports the shown goods holder.

As seen in Fig. 9d, the two parts 1211a, 1211b making up the goods holder support 1211 are in an intermediate position between first and second position. As discussed above, pivoting of the parts 1211a, 1211b of the goods holder support 1211 is actuated by means of a device (214, visible in Fig. 9ca) for altering position of the goods holder support.

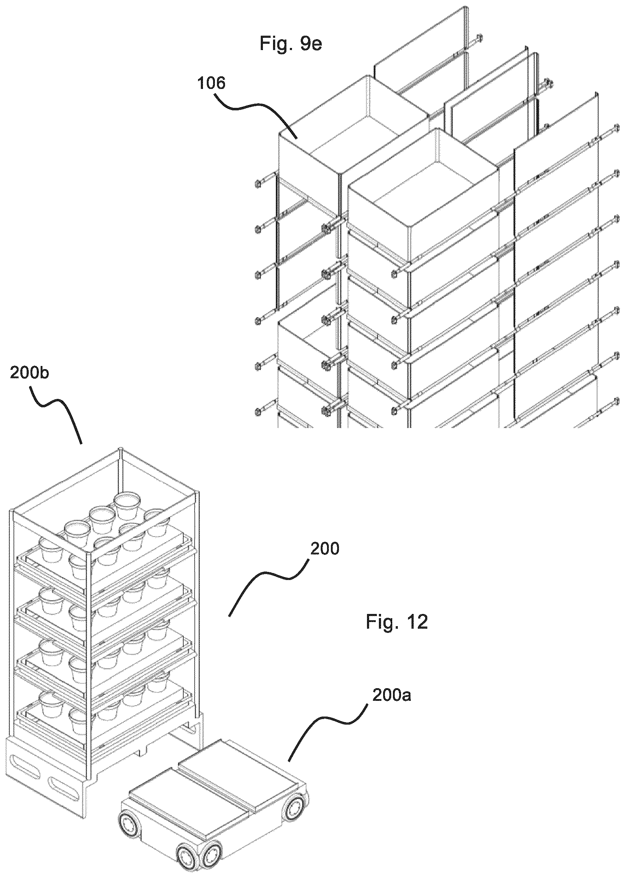

In Fig. 9e, the pivoting motion of the parts 1211a, 1211b of Fig. 9d caused by the device 214 of Fig. 9ca is completed and the goods holder support is in first position. Furthermore, a goods holder 106 inserted by means of a remotely operated vehicle shown in Figs 9a-9b is supported by the goods holder support.

Fig. 10 shows a storage cell 101' with a goods holder support 121 comprising friction reducing means 206. In order to reduce friction and improve guiding of the vertically moving goods holder (not shown), friction reducing means in the form of rollers 206 may be provided. In certain embodiments, the rollers 206 are only arranged on a side of the support 121 that faces the goods holder when said goods holder passes through the storage cell.

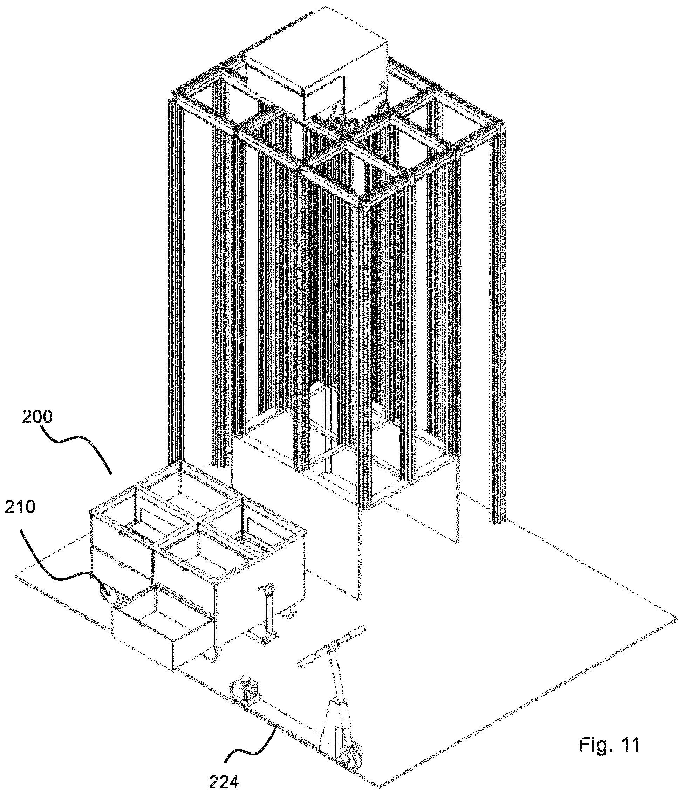

Fig. 11 shows a storage column module 200 provided with wheels 210 and configured to be towed, for example by an operator using shown vehicle 224. A skilled operator is well-acquainted with ways to correctly couple the wheeled module 200 with the towing vehicle 224. In a related embodiment (not shown), said module may be configured for transport by means of a transport vehicle, such as a lorry. More specifically, this could entail a module of certain size and shape so as to be able to fit said module on the open trailer associated with the lorry.

Fig. 12 shows a self-propelled storage column module 200 according to an embodiment of the present invention. The module 200 is shown prior to wheeled base 200a being firmly connected with a storage part 200b. The shown wheeled base 200a of the storage column module 200 comprises drive means (not visible) configured to drive the module in the first and the second directions. The drive means may comprise a first set of wheels and a second set of wheels which enable lateral movement of the module in the first direction and in the second direction, respectively. The drive means may further comprise one or several motors configured to provide torque to at least one wheel to cause movement of the storage column module in the first direction and/or the second direction. The motor may be engaged with one or several wheels by means of belts(s), chain(s) and/or shaft(s). Alternatively, the motor may be a hub motor, such as an outer rotor motor arranged within a wheel. The drive means may comprise a power source configured to operate the one or several motors. The power source is typically a battery. Alternatively, power may be provided to the drive means from an external source. The storage column module 200 may be provided with sensors, cameras and/or radar units and suitable control systems in order to increase the module's degree of autonomy and reduce the need for human input when the module is moving and in particular when said module is being coupled to the framework structure of an automated storage and retrieval system.

In the preceding description, various aspects of a storage column module and of the automated storage and retrieval system according to the invention have been described with reference to the illustrative embodiments. For purposes of explanation, specific numbers, systems and configurations were set forth in order to provide a thorough understanding of the system and its workings. Various modifications and variations of the illustrative embodiments, as well as other embodiments of the system, which are apparent to persons skilled in the art to which the disclosed subject matter pertains, are deemed to lie within the scope of the present invention as defined in the appended claims.

### LIST OF REFERENCE NUMBERS

- 1: Storage and retrieval system
- 100: Framework structure
- 101: Storage cell
- 101': Storage cell of the storage column module
- 102: Upright members of framework structure
- 102': Upright members of the framework structure of the module
- 104: Storage grid
- 105: Storage column
- 105': Storage column of the storage column module
- 106: Storage container / Goods holder
- 107: Stack of storage containers
- 110: Parallel rails in first direction (*X*)
- 111: Parallel rails in second direction (Y)
- 112: Access opening
- 119: First port column
- 121: Goods holder support
- 121a, 121b: Goods holder support parts
- 123: Motor
- 125: Bar
- 127a, 127b: Threaded sleeves
- 129: Rod
- 131: Another bar
- 200: Storage column module
- 200a: Wheeled base
- 200b: Storage part
- 201: Container handling vehicle belonging to prior art
- 201a: Vehicle body of the container handling vehicle 201
- 201b: Drive means / wheel arrangement, first direction (*X*)
- 201c: Drive means / wheel arrangement, second direction (*Y*)
- 206: Friction reducing means
- 208: Guide means
- 210: Wheels of the storage column module
- 214: Device for altering position of the goods holder support
- 215: Hinge
- 217: Rotatable axis
- 220: Free space
- 230: Means for guiding the module, set of rollers
- 301: Cantilever-based container handling vehicle belonging to prior art
- 301a: Vehicle body of the container handling vehicle 301
- 301b: Drive means in first direction (*X*)
- 301c: Drive means in second direction (*Y*)
- 401: Container handling vehicle belonging to prior art
- 401a: Vehicle body of the container handling vehicle 401
- 401b: Drive means in first direction (*X*)
- 401c: Drive means in second direction (*Y*)
- 1211: Goods holder support of Fig. 9c
- 1212: Neighbouring goods holder support of Fig. 9c
- 1211a: Part of goods holder support 1211
- 1211b: Part of goods holder support 1211
- X: First direction
- Y: Second direction
- Z: Third direction
- A1: Denotes direction of insertion of goods holders
- A2, A3: Denotes direction of extraction of goods holders
- HA: Horizontal axis
- HAa, HAb: Parallel pivot axes

## Claims

1. An automated storage and retrieval system (1) comprising a framework structure (100) that comprises a plurality of storage columns (105) for accommodating goods holders (106), wherein a rail system (108) is arranged across the top of the framework structure (100), the automated storage and retrieval system (1) further comprising a detachable storage column module (200) for coupling to the framework structure (100) of the system (1), said module (200) comprising at least one storage column (105') for accommodating goods holders (106) inserted by means of a remotely operated vehicle (500) operating on the rail system (108),
**characterised in that** the
at least one storage column (105') comprising a plurality of storage cells (101') each comprising a goods holder support (121) movable between a first position in which said support can obstruct passage of the goods holder (106) moving vertically through the storage cell (101') and a second position in which the vertically moving goods holder (106) can pass through the storage cell (101').

2. An automated storage and retrieval system (1) of claim 1, wherein the goods holder support (121) is pivotable about a horizontal axis (HA).

3. An automated storage and retrieval system (1) of any of the preceding claims, wherein the horizontal axis (HA) extends between two adjacent corners of the storage cell (101').

4. An automated storage and retrieval system (1) of any of the preceding claims, wherein the goods holder support (121) comprises two parts (121a, 121b) having parallel pivot axes (HAa, HAb).

5. An automated storage and retrieval system (1) of claim 1, wherein the goods holder support (121) is translatory movable between a first position in which said support (121) can obstruct passage of the goods holder (106) moving vertically through the storage cell (101') and a second position in which the vertically moving goods holder (106) can pass through the storage cell (101').

6. An automated storage and retrieval system (1) of any of the preceding claims, wherein the goods holder support (121) comprises friction reducing means (206) in the form of rollers arranged in the support (121).

7. An automated storage and retrieval system (1) of any of the preceding claims, wherein the goods holder support (121) comprises guide means (208) arranged on a side of the support (121) that faces the goods holder (106) when said goods holder (106) passes through the storage cell (101').

8. An automated storage and retrieval system (1) of any of the preceding claims, further comprising a unit for controlling the position of the goods holder support (121) of the storage cell (101').

9. An automated storage and retrieval system (1) of any of the claims 1-7, wherein the position of the goods holder support (121) of the storage cell (101') is controlled by the storage column module (200).

10. An automated storage and retrieval system (1) of any of the preceding claims, said module (200) comprising a rail system arranged across the top of the storage column module (200).

11. An automated storage and retrieval system (1) of any of the preceding claims, wherein said module (200) is self-propelled.

12. An automated storage and retrieval system (1) of any of the claims 1-10, wherein said module (200) is provided with wheels (210) and configured to be towed.

13. An automated storage and retrieval system (1) of any of the preceding claims, further comprising means (230) for guiding the module (200) into a correct position, when the detachable module (200) is inserted into a free space (220) of the system (1), wherein said means (230) for guiding comprises a complementary groove-and projection assembly and wherein the correct position is reached when the upright members (102) of the framework structure (100) are aligned with upright members (102') of the framework structure of the module (200) received in said free space (220).

14. An automated storage and retrieval system (1) of claim 13, further comprising means for locking the module in the correct position.

15. An automated storage and retrieval system (1) of claim 14, wherein said means for locking comprises a releasable latch.

## Patentansprüche

1. Automatisiertes Lager- und Entnahmesystem (1), das eine Rahmenstruktur (100) umfasst, die eine Mehrzahl von Lagersäulen (105) zum Aufnehmen von Warenhaltern (106) umfasst, wobei ein Schienensystem (108) über die Oberseite der Rahmenstruktur (100) angeordnet ist, wobei das automatisierte Lager- und Entnahmesystem (1) ferner ein abnehmbares Lagersäulenmodul (200) zum Koppeln mit der Rahmenstruktur (100) des Systems (1) umfasst, wobei das Modul (200) mindestens eine Lagersäule (105') zum Aufnehmen von Warenhaltern (106) umfasst, die mittels eines fernbetriebenen Fahrzeugs (500) eingesetzt werden, das auf dem Schienensystem (108) betrieben wird,
**dadurch gekennzeichnet, dass** die mindestens eine Lagersäule (105') eine Mehrzahl von Lagerzellen (101') umfasst, die jeweils einen Warenhalterträger (121) umfassen, der zwischen einer ersten Position, in der der Träger einen Durchgang des sich vertikal durch die Lagerzelle (101') bewegenden Warenhalters (106) behindern kann, und einer zweiten Position, in der der sich vertikal bewegende Warenhalter (106) durch die Lagerzelle (101') hindurchgehen kann, bewegbar ist.

2. Automatisiertes Lager- und Entnahmesystem (1) nach Anspruch 1, wobei der Warenhalterträger (121) um eine horizontale Achse (HA) schwenkbar ist.

3. Automatisiertes Lager- und Entnahmesystem (1) nach einem der vorhergehenden Ansprüche, wobei sich die horizontale Achse (HA) zwischen zwei benachbarten Ecken der Lagerzelle (101') erstreckt.

4. Automatisiertes Lager- und Entnahmesystem (1) nach einem der vorhergehenden Ansprüche, wobei der Warenhalterträger (121) zwei Teile (121a, 121b) mit parallelen Schwenkachsen (HAa, HAb) umfasst.

5. Automatisiertes Lager- und Entnahmesystem (1) nach Anspruch 1, wobei der Warenhalterträger (121) zwischen einer ersten Position, in der der Träger (121) einen Durchgang des sich vertikal durch die Lagerzelle (101') bewegenden Warenhalters (106) behindern kann, und einer zweiten Position, in der der sich vertikal bewegende Warenhalter (106) durch die Lagerzelle (101') hindurchgehen kann, translatorisch bewegbar ist.

6. Automatisiertes Lager- und Entnahmesystem (1) nach einem der vorhergehenden Ansprüche, wobei der Warenhalterträger (121) Reibungsreduzierungsmittel (206) in Form von Rollen umfasst, die in dem Träger (121) angeordnet sind.

7. Automatisiertes Lager- und Entnahmesystem (1) nach einem der vorhergehenden Ansprüche, wobei der Warenhalterträger (121) Führungsmittel (208) umfasst, die auf einer Seite des Trägers (121) angeordnet sind, die dem Warenhalter (106) zugewandt ist, wenn der Warenhalter (106) durch die Lagerzelle (101') hindurchgeht.

8. Automatisiertes Lager- und Entnahmesystem (1) nach einem der vorhergehenden Ansprüche, ferner umfassend eine Einheit zum Steuern der Position des Warenhalterträgers (121) der Lagerzelle (101').

9. Automatisiertes Lager- und Entnahmesystem (1) nach einem der Ansprüche 1-7, wobei die Position des Warenhalterträgers (121) der Lagerzelle (101') durch das Lagersäulenmodul (200) gesteuert wird.

10. Automatisiertes Lager- und Entnahmesystem (1) nach einem der vorhergehenden Ansprüche, wobei das Modul (200) ein Schienensystem umfasst, das über die Oberseite des Lagersäulenmoduls (200) angeordnet ist.

11. Automatisiertes Lager- und Entnahmesystem (1) nach einem der vorhergehenden Ansprüche, wobei das Modul (200) selbstfahrend ist.

12. Automatisiertes Lager- und Entnahmesystem (1) nach einem der Ansprüche 1-10, wobei das Modul (200) mit Rädern (210) versehen und dazu ausgelegt ist, gezogen zu werden.

13. Automatisiertes Lager- und Entnahmesystem (1) nach einem der vorhergehenden Ansprüche, ferner umfassend Mittel (230) zum Führen des Moduls (200) in eine korrekte Position, wenn das abnehmbare Modul (200) in einen freien Raum (220) des Systems (1) eingeführt wird, wobei das Mittel (230) zum Führen eine komplementäre Nut-und-Vorsprung-Anordnung umfasst und wobei die korrekte Position erreicht wird, wenn die aufrechten Elemente (102) der Rahmenstruktur (100) mit aufrechten Elementen (102') der Rahmenstruktur des in dem freien Raum (220) aufgenommenen Moduls (200) ausgerichtet sind.

14. Automatisiertes Lager- und Entnahmesystem (1) nach Anspruch 13, ferner umfassend Mittel zum Arretieren des Moduls in der korrekten Position.

15. Automatisiertes Lager- und Entnahmesystem (1) nach Anspruch 14, wobei das Mittel zum Arretieren eine lösbare Verriegelung umfasst.

## Revendications

1. Système automatisé de stockage et de récupération (1) comprenant une structure d'ossature (100) qui comprend une pluralité de colonnes de stockage (105) destinée à loger des compartiments de marchandises (106), dans lequel un système de rails (108) est agencé sur le dessus de la structure d'ossature (100), le système automatisé de stockage et de récupération (1) comprenant en outre un module de colonne de stockage détachable (200) destiné à être couplé à la structure d'ossature (100) du système (1), ledit module (200) comprenant au moins une colonne de stockage (105') destinée à loger des compartiments de marchandises (106) insérés au moyen d'un véhicule commandé à distance (500) en fonctionnement sur le système de rails (108),
**caractérisé en ce que** l'au moins une colonne de stockage (105') comprend une pluralité de cellules de stockage (101') comprenant chacune un support de compartiment de marchandises (121) mobile entre une première position, dans laquelle ledit support peut obstruer le passage du compartiment de marchandises (106) entrant en mouvement verticalement à travers la cellule de stockage (101), et une seconde position, dans laquelle le compartiment de marchandises entrant en mouvement verticalement (106) peut passer à travers la cellule de stockage (101').

2. Système automatisé de stockage et de récupération (1) de la revendication 1, dans lequel le support de compartiment de marchandises (121) peut pivoter autour d'un axe horizontal (HA).

3. Système automatisé de stockage et de récupération (1) de quelconque des revendications précédentes, dans lequel l'axe horizontal (HA) s'étend entre deux coins adjacents de la cellule de stockage (101).

4. Système automatisé de stockage et de récupération (1) de quelconque des revendications précédentes, dans lequel le support de compartiment de marchandises (121) comprend deux parties (121a, 121b) ayant des axes de pivotement parallèles (HAa, HAb).

5. Système automatisé de stockage et de récupération (1) de la revendication 1, dans lequel le support de compartiment de marchandises (121) peut être mis en mouvement de translation entre une première position, dans laquelle ledit support (121) peut obstruer le passage du compartiment de marchandises (106) entrant en mouvement verticalement à travers la cellule de stockage (101), et une seconde position, dans laquelle le compartiment de marchandises entrant en mouvement verticalement (106) peut passer à travers la cellule de stockage (101').

6. Système automatisé de stockage et de récupération (1) de quelconque des revendications précédentes, dans lequel le support de compartiment de marchandises (121) comprend des moyens de réduction de frottement (206) sous la forme de rouleaux agencés dans le support (121).

7. Système automatisé de stockage et de récupération (1) de quelconque des revendications précédentes, dans lequel le support de compartiment de marchandises (121) comprend des moyens de guidage (208) agencés sur un côté du support (121) qui fait face au compartiment de marchandises (106) lorsque ledit compartiment de marchandises (106) passe à travers la cellule de stockage (101').

8. Système automatisé de stockage et de récupération (1) de quelconque des revendications précédentes, comprenant en outre une unité pour commander la position du support de compartiment de marchandises (121) de la cellule de stockage (101').

9. Système automatisé de stockage et de récupération (1) de quelconques des revendications 1 à 7, dans lequel la position du support de compartiment de marchandises (121) de la cellule de stockage (101') est commandée par le module de colonne de stockage (200) .

10. Système automatisé de stockage et de récupération (1) de quelconque des revendications précédentes, ledit module (200) comprenant un système de rails agencé sur le dessus du module de colonne de stockage (200).

11. Système automatisé de stockage et de récupération (1) de quelconque des revendications précédentes, dans lequel ledit module (200) est automoteur.

12. Système automatisé de stockage et de récupération (1) de quelconques des revendications 1 à 10, dans lequel ledit module (200) est pourvu de roues (210) et configuré pour être remorqué.

13. Système automatisé de stockage et de récupération (1) de quelconque des revendications précédentes, comprenant en outre des moyens (230) destinés à guider le module (200) dans une position correcte, lorsque le module détachable (200) est inséré dans un espace libre (220) du système (1), dans lequel lesdits moyens (230) destinés à guider comprennent un ensemble complémentaire rainure-et-saillie, et dans lequel la position correcte est atteinte lorsque les éléments verticaux (102) de la structure d'ossature (100) sont alignés avec des éléments verticaux (102') de la structure d'ossature du module (200) reçu dans ledit espace libre (220).

14. Système automatisé de stockage et de récupération (1) de la revendication 13, comprenant en outre des moyens destinés à bloquer le module dans la position correcte.

15. Système automatisé de stockage et de récupération (1) de la revendication 14, dans lequel lesdits moyens destinés à bloquer comprennent un verrou libérable.
